# EUROPÄISCHE PATENTSCHRIFT

(11) **EP 3 766 583 B1**
(45) Veröffentlichungstag und Bekanntmachung des Hinweises auf die Patenterteilung: **30.08.2023**
(21) Anmeldenummer: 20000247.5
(22) Anmeldetag: 08.07.2020
(51) Int. Cl.: B02C 13/14, B02C 13/284, B02C 18/08, B02C 18/22, B29B 17/04

(54) **ZERKLEINERUNGSVORRICHTUNG**
CRUSHING DEVICE
DISPOSITIF DE DÉSINTÉGRATION

(30) Priorität: 12.07.2019 DE 102019004847
(43) Veröffentlichungstag der Anmeldung: 20.01.2021
(73) Patentinhaber: HOSOKAWA ALPINE Aktiengesellschaft, 86199 Augsburg (DE)
(72) Erfinder: Krause, Jörg, 86507 Kleinaiting (DE); Michalek, Thomas, 86157 Augsburg (DE); Zöttl, Josef, 86356 Schlipsheim (DE)

(56) Entgegenhaltungen:
- US-A- 4 245 999
- US-A- 5 192 029
- US-A1- 2016 228 879

## Beschreibung

Die Erfindung richtet sich auf eine Zerkleinerungsvorrichtung nach dem Oberbegriff des Hauptanspruchs. Die erfindungsgemäße Zerkleinerungsvorrichtung kombiniert einen Schredder mit einer Schneidmühle.

Beim Recycling von Material ist es bei speziellen Aufgabenstellungen erforderlich sehr grobes bzw. großes Material wie z.B. Kunststoffbrocken, Platten oder Rohre zu einem feinen Endprodukt zu zerkleinern. Für die Erzielung eines feinen Endproduktes ist eine Schneidmühle erforderlich. Der Nachteil einer Schneidmühle ist ihr begrenztes Annahmeverhalten, so dass je nach Größe des Aufgabematerials eine manuelle oder maschinelle Vorzerkleinerung erforderlich wird, um das Material für die Schneidmühle handhabbar zu machen. Bei maschineller Vorzerkleinerung wird in der ersten Zerkleinerungsstufe beispielsweise ein Shredder eingesetzt, gefolgt von einer Feinzerkleinerung auf die gewünschte Endgröße in einer zweiten Zerkleinerungsvorrichtung, einer Schneidmühle.

Dazu finden bisher mehrheitlich getrennte Maschinen Einsatz. Das Material wird dabei über Förderbänder von einer Maschine in die nächste geführt. Eventuell ist ein Zwischenbunker für das Material erforderlich.

Es sind auch Maschinen bekannt die beide Zerkleinerungsstufen in einer Maschine vereinen. Dabei sind die Rotoren der beiden Zerkleinerungsstufen waagerecht und parallel übereinander angeordnet, sodass das zu zerkleinernde Material nacheinander durch beide Zerkleinerungsstufen geführt wird.

Gattungsgemäße Vorrichtungen sind in der EP 1 068 904 B1 oder in der EP 3 238 826 B1 offenbart. Eine Kombination von Schredder und Schneidmühle in einer Maschine mit waagerecht ausgerichteten Rotoren ist auch von der Firma Vecoplan und Dreher bekannt.

In der US 2016/228879 A1 ist eine Vorrichtung zum Freilegen bzw. Trennen von Stoffen mit unterschiedlichen Eigenschaften aus Materialkonglomeraten offenbart. Die Vorrichtung weist eine Zerkleinerungskammer mit mehreren aufeinanderfolgenden Abschnitten mit Rotoren, an welchen Schlagwerkzeuge angeordnet sind, auf. Die Rotoren in den Abschnitten laufen zum Teil gegenläufig. Die Materialien werden aufgrund ihrer unterschiedlichen Dichte bzw. Konsistenz durch Prall zerkleinert, um die Konglomerate aufzuschließen.

Die US 4 245 999 A offenbart eine Vorrichtung zur Prallzerkleinerung von Abfall. Die Zerkleinerungsvorrichtung weist ein Mühlengehäuse mit einer vertikalen Welle mit mehreren gleichartigen übereinander angeordneten Prallrotoren in unterschiedlichen Behandlungszonen auf. Diese wirken eine Luftströmung in der Vorrichtung zusammen.

Der Erfindung liegt die Aufgabe zugrunde eine Vorrichtung zu Verfügung zu stellen, die grobes und großes Aufgabematerial in nur einer Maschine auf die Feinheit einer Schneidmühle herunter zerkleinert. Die Vorrichtung soll selbstdosierend ausgeführt sein.

Bei einer Zerkleinerungsvorrichtung der eingangs beschriebenen Art wird die Aufgabe erfindungsgemäß durch das Kennzeichen des Hauptanspruchs gelöst. Bei der Vorrichtung wird ein Schredder für die Vorzerkleinerung mit einer Schneidmühle für die Feinzerkleinerung kombiniert.

Des Weiteren werden die Rotoren von Schredder als erste Zerkleinerungsstufe und Schneidmühle als zweite Zerkleinerungsstufe senkrecht und übereinander auf einer gemeinsamen Drehachse angeordnet. Die mit den Rotoren zusammenarbeitenden Statoren sind im Gehäuse der Maschine angeordnet, sie sind in ihrer Längserstreckung ebenfalls senkrecht ausgerichtet.

Das zu zerkleinernde Material wird über eine Einlaufschurre der ersten Zerkleinerungsstufe, der Vorzerkleinerungsstufe, einem Schredder, mit Hilfe eines Puschers / Drückers seitlich, in den Zerkleinerungsbereich zwischen Rotor und Statoren des Schredders zugeführt. Das Material wird durch die Rotor- und Statormesser auf eine mittlere Größe vorzerkleinert und fällt dann mittels Schwerkraft in die zweite Zerkleinerungsstufe, die Feinzerkleinerungsstufe, eine Schneidmühle. Das Material wird hier zwischen Rotor und Statoren auf die gewünschte Endgröße zerkleinert und verlässt über ein Sieb, welches den Zerkleinerungsraum begrenzt, und über den Produktaustritt die Maschine.

Der Schredderrotor und der Schneidmühlenrotor sind auf einer gemeinsamen vertikalen Drehachse angeordnet. Die beiden Rotoren können auf einer gemeinsamen Welle angeordnet sein und werden mit gleicher Drehzahl gefahren.

In einer anderen Ausführungsform können die Rotoren auf getrennten Wellen, aber gleicher Drehachse, angeordnet sein. Dann können die Rotoren mit gleicher oder unterschiedlicher Drehzahl gefahren werden. Für die Vorzerkleinerung im Schredder werden dann kleinere Drehzahlen gewählt als für die Feinzerkleinerung in der Schneidmühle. Das Verhältnis wird der jeweiligen Aufgabenstellung angepasst

Die Rotoren wirken mit Sieben auf der Austragsseite des Gehäuses zusammen. Sie trennen den Zerkleinerungsbereich vom Produktauslass. Je nach Anforderungen kommen Siebe unterschiedlicher Lochweiten und Form zu Einsatz. Die Siebe sind in jedem Segment der Mühle frei wählbar. Im Schredderbereich können auch Blindsiebe eingesetzt werden.

Die Messerausführung und die Messeranordnung bei beiden Maschinen kann dem jeweiligen Produkt angepasst werden.

Des Weiteren kann die Shredder-Schneid-Mühle auch mit zwei oder mehr nebeneinander angeordneten senkrechten Rotoren mit oberen Schredderbereich und unterem Schneidmühlenbereich ausgerüstet werden. In diesem Fall weist die erfindungsgemäße Vorrichtung einen breiteren Arbeitsbereich auf und es kann ein größerer Durchsatz realisiert werden.

Für die optimale Materialaufgabe ist die Maschine mit einem Pusher ausgeführt. Das Material wird seitlich mit einem Pusher in den Zerkleinerungsbereich der Vorrichtung zugeführt. In einer bevorzugten Ausführungsform wird das Material im rechten Winkel mittels Pusher in die Maschine dosiert. Zum Einsatz kommen Pusher unterschiedlicher Ausführungsform und in unterschiedlichen Längenbereichen, je nach Abmessung des zu zerkleinernden Materials.

Durch die vertikale Anordnung des Schredderrotors, im Vergleich zu Maschinen nach dem Stand der Technik, kann neben den üblichen Materialien wie Gehäuseteilen, Brocken und ähnlichem speziell auch Langmaterial wie Profile, Platten oder Rohrmaterial mit geringstem Beschickungsaufwand zerkleinert werden. Die Materialzuführung kann dabei kontinuierlich erfolgen, da Material stets nachgeworfen werden kann im Gegensatz zu Lösungen mit einer Magazinbeschickung, wie sie nach dem aktuellen Stand der Technik insbesondere bei Schneidmühlen für Langmaterial üblich sind.

Durch die Kombination von Schredder und Schneidmühle in einer Maschine werden die Vorteile beider Maschinen ausgenutzt, nämlich die Selbstdosierung des Schredders und das Mahlen auf eine Endfeinheit einer Schneidmühle.

Die vertikale Rotoranordnung ermöglicht die Kombination der Schredderfunktion mit der Schneidmühlenfunktion auf einer gemeinsamen Rotorwelle, was eine erhebliche maschinentechnische Vereinfachung gegenüber den 2-stufigen Lösungen nach aktuellem Stand der Technik darstellt.

Durch die senkrechte Anordnung der Rotoren, ergibt sich gegenüber der waagerechten Anordnung nach dem Stand der Technik der Vorteil, dass die Maschine mit nur einem Rotor ausgeführt werden kann. Die Funktion einer solchen Maschine kann nur durch eine senkrechte Rotoranordnung sichergestellt werden, da nur dann das vorzerkleinerte Material mittels Schwerkraft in den unteren Feinzerkleinerungsbereich fallen kann.

Die Kombination eines oben angeordneten Schredderbereiches und einem darunter angeordnetem Schneidmühlenbereichs auf einer gemeinsamen Drehachse ermöglicht eine selbstdosierende Arbeitsweise der Maschine im Schredderbereich und stellt damit eine erhebliche Verbesserung hinsichtlich der Vereinfachung der Beschickung herkömmlicher Schneidmühlen dar. Das Aufgabematerial, auch Langmaterial kann kontinuierlich nachgeworfen werden.

Dies vereinfacht die Aufgabesituation und es entfällt die personal- und arbeitsintensive Beschickung wie es die Schneidmühle mit sich bringt.

Außerdem ermöglicht die vertikale Anordnung der zwei Rotoren eine gute und einfache Zugänglichkeit über eine einfach zu öffnende Tür für Reinigungs- und Wartungszwecke.

Weitere Einzelheiten, Merkmale und Vorteile des Gegenstandes der Erfindung ergeben sich aus den Unteransprüchen sowie aus der nachfolgenden Beschreibung der zugehörigen Zeichnungen, in der -beispielhaft- ein bevorzugtes Ausführungsbeispiel der Erfindung dargestellt ist. In der Zeichnung zeigt:
Figur 1 zeigt eine Schredder-Schneid-Mühle mit Einlaufschurre und Pusher
Figur 2 zeigt die Schredder-Scheid-Mühle im Ausschnitt mit geöffneter Tür

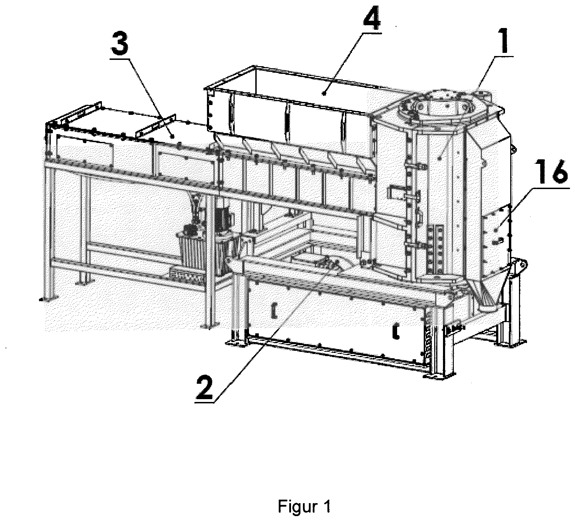

Bei der Ausführungsform nach Figur 1 ist eine erfindungsgemäße Schredder-Schneid-Mühle 1 mit Peripherie dargestellt. Sie besteht aus einer eigentlichen Schredder-Schneidmühle 1 welche auf einem Tisch 17 aufgestellt ist. Unterhalb der Mühle1 bzw. unter dem Tisch 17 sind die Antriebskomponenten 2 angeordnet. Gespeist wird die Mühle 1 über einen Puscher 3, der mit einer Einlaufschurre 4 ergänzt wird.

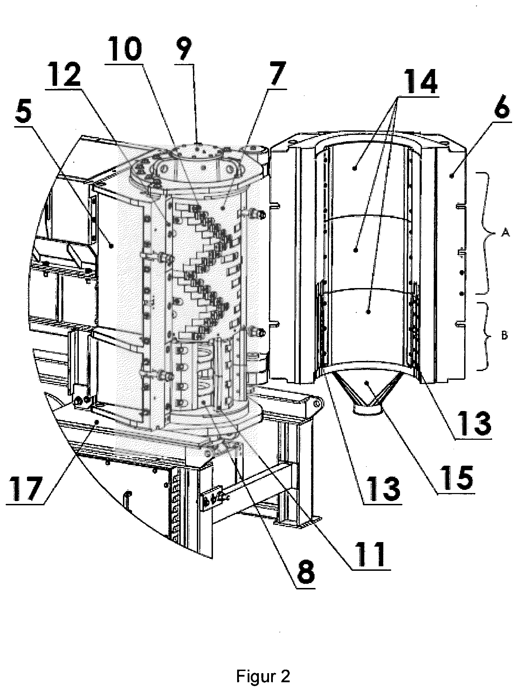

Die Figur 2 zeigt die Schredder-Schneid-Mühle 1, sie umfasst ein Gehäuse 5 mit Tür 6, einen Produkteinlass (nicht dargestellt) und einen Produktaustrag 15.

Die erfindungsgemäße Vorrichtung umfasst eine erste Zerkleinerungsstufe A, dem Schredder und einer zweite Zerkleinerungsstufe B, der Schneidmühle. Im Gehäuse sind der Schredderrotor 7 und der Schneidmühlenrotor 8 übereinander auf derselben Drehachse 9 angeordnet, wobei der Schredderrotor 7 oberhalb des Schneidmühlenrotors 8 angeordnet ist. In dieser Ausführungsform sind die beiden Rotoren 7 und 8 auf einer durch einen Motor angetriebenen Welle angeordnet. Die beiden Rotoren 7 und 8 sind mit entsprechenden Messern 10 bzw. 11 versehen. Die Rotormesser 10, 11 arbeiten mit dem im Gehäuse 5 und der Tür 6 eingesetzten Statormessern 12 und 13 zusammen. Die Statormesser 12 und 13 haben parallel zur Drehachse 9 verlaufende Schneidkanten. Der obere Bereich der Statormesser 12 wirken mit den Schredderrotor 7 zusammen. Der Schneidmühlenrotor 8 wirkt mit dem unteren Bereich der Statormesser 12 und den Statormessern 13 in der Mühlentür 6 zusammen. Türseitig wird der Wirkbereich des kombinierten Rotors von Sieben 14 begrenzt. Das zerkleinerte Material tritt durch die Siebe und wird durch den Produktaustrag 15 ausgetragen.

Die Statormesser 12 bzw. 13 die mit den Messern 10 des Schredderrotors 7 bzw. den Messern 11 des Schneidmühlenrotors 8 zusammenwirken, können in der Anzahl und Geometrie variieren. Im dargestellten Ausführungsbeispiel weist der Schredderzone zwei Statormesser 12 auf, die im Gehäusebereich 5 angeordnet sind.

In der Schneidmühlenzone sind es 6 Statormesser 13, die im Gehäuse 5 und in der Tür 6 angeordnet sind.

Die Messer 10 des Schredderrotors 7 sind auswechselbar und können hinsichtlich der Geometrie und damit der Schneideigenschaften an das Produkt angepasst werden. Die Messer 11 und 12 des Schneidmühlenbereiches können hinsichtlich der Anzahl der jeweiligen Aufgabenstellung angepasst werden.

Das zu zerkleinernde Material wird mittels einer Einlaufschurre 4 und einen Pusher 3 über einen Produkteinlass 18 dem oberen Bereich der Mühle 1, der ersten Zerkleinerungsstufe A, dem Schredderbereich zugeführt. Der Schredder zerkleinert das Material in ein Material mittlerer Korngröße welches dann durch die Schwerkraft in die zweite Zerkleinerungsstufe B, dem Schneidmühlenbereich, dem Wirkbereich zwischen Schneidmühlenrotor 8 und den mit den Schneidmessern 11 zusammenwirkenden Statormessern 13 weiter zerkleinert wird bis das Material über das Sieb 14 den Mahlbereich verlässt und über den Produktaustrag 15 verlässt.

Die Mühlentür 6 besitzt eine Wartungsklappe 16, die eine einfache und schnelle Möglichkeit zum Zugang zum Sieb darstellt.

### Bezugszeichenliste

A erste Zerkleinerungsstufe
B zweite Zerkleinerungsstufe
1 Schredder-Schneidmühle
2 Antriebskomponenten
3 Puscher
4 Einlaufschurre
5 Gehäuse
6 Tür
7 Schredderrotor
8 Schneidmühlenrotor
9 Drehachse
10, 11 Rotormesser
12, 13 Statormessern
14 Sieb
15 Produktaustrag
16 Wartungsklappe
17 Tisch

## Patentansprüche

1. Zerkleinerungsvorrichtung 1 umfassend
eine ersten Zerkleinerungsstufe A mit einem drehantreibbaren Rotor 7 und unterhalb angeordnete zweiten Zerkleinerungsstufe B mit einem drehantreibbaren Rotor 8 wobei
der Rotor 7 der ersten Zerkleinerungsstufe A und der Rotor 8 der zweiten Zerkleinerungsstufe B eine gemeinsame Drehachse 9 aufweisen und die Drehachse 9 vertikal ausgerichtet ist
**dadurch gekennzeichnet, dass**
die erste Zerkleinerungsstufe A ein Schredder ist und die zweite Zerkleinerungsstufe B eine Schneidmühle ist.

2. Vorrichtung nach Anspruch 1, **dadurch gekennzeichnet, dass**
der Rotor 7 der ersten Zerkleinerungsstufe A und der Rotor 8 der zweiten Zerkleinerungsstufe B übereinander auf einer Welle angeordnet sind, welche motorangetrieben ist.

3. Vorrichtung nach Anspruch 1, **dadurch gekennzeichnet, dass**
der Rotor 7 der ersten Zerkleinerungsstufe A und der Rotor 8 der zweiten Zerkleinerungsstufe B auf getrennten Wellen auf derselben Drehachse 9 drehantreibbar angeordnet sind.

4. Vorrichtung nach Anspruch einem oder mehreren der vorangegangenen Ansprüche, **dadurch gekennzeichnet, dass**
das zu zerkleinernde Material seitlich in Höhe des ersten Rotors 7 in die erste Zerkleinerungsstufe A aufgegeben wird.

5. Vorrichtung nach Anspruch einem oder mehreren der vorangegangenen Ansprüche, **dadurch gekennzeichnet, dass**
das zu zerkleinernde Material seitlich mittels Pusher in Höhe des ersten Rotors 7 in die erste Zerkleinerungsstufe A aufgegeben wird.

6. Vorrichtung nach Anspruch einem oder mehreren der vorangegangenen Ansprüche, **dadurch gekennzeichnet, dass**
die Vorrichtung mehrere nebeneinander senkrecht angeordnete Rotoren aufweist, die aus einem oberen Schredderrotor 7 und einem unteren Schneidmühlen-Rotor 8 mit gemeinsame Drehachse 9 bestehen.

## Claims

1. Comminution unit 1, comprising
a first comminution stage A with a rotor 7 driven by means of a rotary drive and a second comminution stage B located underneath with a rotor 8 driven by means of a rotary drive whereby
the rotor 7 of the first comminution stage A and the rotor 8 of the second comminution stage B have a common rotational axis 9 that is vertically aligned
**characterised in that**
the first comminution stage A is a shredder and the second comminution stage B is a granulator.

2. Device in accordance with Claim 1, **characterised in that**
the rotor 7 of the first comminution stage A and the rotor 8 of the second comminution stage B are located one above the other on a shaft which is motor-driven.

3. Device in accordance with Claim 1, **characterised in that**
the rotor 7 of the first comminution stage A and the rotor 8 of the second comminution stage B are located on separate shafts on the same rotational axis 9 and are driven by a rotary drive.

4. Device in accordance with one or more of the preceding Claims, **characterised in that**
the material to be comminuted is charged to the first comminution stage A from the side on the level of the first rotor 7.

5. Device in accordance with one or more of the preceding Claims, **characterised in that**
the material to be comminuted is charged to the first comminution stage A from the side by means of a pusher on the level of the first rotor 7.

6. Device in accordance with one or more of the preceding Claims, **characterised in that**
the unit has several vertically positioned rotors arranged parallel to each other which comprise a top shredder rotor 7 and a bottom granulator rotor 8 with a common rotational axis 9.

## Revendications

1. Dispositif de désintégration 1 comprenant
une première étape de désintégration A avec un rotor 7 pouvant être entraîné en rotation et une deuxième étape de désintégration B disposée en dessous avec un rotor 8 pouvant être entraîné en rotation, dans lequel
le rotor 7 de la première étape de désintégration A et le rotor 8 de la deuxième étape de désintégration B ont un axe de rotation commun 9 et l'axe de rotation 9 est diposé verticalement,
**caractérisé par le fait que**
la première étape de désintégration A est une déchiqueteuse et la deuxième étape de désintégration B est un broyeur à couteaux.

2. Dispositif suivant la revendication 1, **caractérisé par le fait que**
le rotor 7 de la première étape de désintégration A et le rotor 8 de la deuxième étape de désintégration B sont disposés l'un au-dessus de l'autre sur un arbre qui est entraîné par moteur.

3. Dispositif suivant la revendication 1, **caractérisé par le fait que**
le rotor 7 de la première étape de désintégration A et le rotor 8 de la deuxième étape de désintégration B pouvant être entraînés en rotation sont disposés sur des arbres séparés sur le même axe de rotation 9.

4. Dispositif suivant une ou plusieurs des revendications précédentes, **caractérisé par le fait que**
le produit à désintégrer est alimenté latéralement au niveau du premier rotor 7 dans la première étape de désintégration A.

5. Dispositif suivant une ou plusieurs des revendications précédentes, **caractérisé par le fait que**
le produit à désintégrer est alimenté latéralement au niveau du premier rotor 7 dans la première étape de désintégration A par dispositif poussoir (pusher).

6. Dispositif suivant une ou plusieurs des revendications précédentes, **caractérisé par le fait que**
le dispositif comprend plusieurs rotors disposés verticalement l'un à côté de l'autre qui sont composés d'un rotor déchiqueteur supérieur 7 et d'un rotor broyeur à couteaux 8 inférieur avec un axe de rotation commun 9.
